# EUROPÄISCHE PATENTSCHRIFT

(11) **EP 1 759 215 B1**
(45) Veröffentlichungstag und Bekanntmachung des Hinweises auf die Patenterteilung: **17.09.2008**
(21) Anmeldenummer: 05742111.7
(22) Anmeldetag: 30.05.2005
(51) Int. Cl.: G01N 35/10

(54) **VORRICHTUNG UND VERFAHREN ZUM ANORDNEN VON PIPETTEN- ODER DISPENSER-SPITZEN IN EINEM SYSTEM ZUM MANIPULIEREN VON FLÜSSIGKEITSPROBEN**
DEVICE AND METHOD FOR DISPOSING PIPETTE TIPS OR DISPENSER TIPS IN A SYSTEM USED FOR MANIPULATING LIQUID SAMPLES
DISPOSITIF ET PROCEDE POUR DISPOSER DES POINTES DE PIPETTE OU DE DISTRIBUTEUR DANS UN SYSTEME SERVANT A MANIPULER DES ECHANTILLONS LIQUIDES

(30) Priorität: 24.06.2004 CH 106704
(43) Veröffentlichungstag der Anmeldung: 07.03.2007
(73) Patentinhaber: Tecan Trading AG, 8708 Männedorf (CH)
(72) Erfinder: WIGGLI, Markus, CH-8632 Tann ZH (CH); SCHINZEL, Fred, CH-8708 Männedorf (CH); FORSTER, Bronwen, CH-8708 Männedorf (CH)
(74) Vertreter: OK pat AG
(86) Internationale Anmeldenummer: PCT/CH2005/000305
(87) Internationale Veröffentlichungsnummer: WO 2006/000115

(56) Entgegenhaltungen:
- WO-A-00/35584
- WO-A-01/51906
- US-A1- 2001 036 425
- US-A1- 2004 096 360

## Beschreibung

Die Erfindung betrifft, gemäss dem Oberbegriff der unabhängigen Ansprüche 1 bzw. 12, eine Vorrichtung und ein Verfahren zum Anordnen von Pipetten- oder Dispenser-Spitzen in einem System zum Manipulieren von Flüssigkeitsproben. Solche Vorrichtungen umfassen einen Robotermanipulator zum Ausrichten von Pipetten- oder Dispenser-Spitzen in einer X-Richtung und in einer im wesentlichen rechtwinklig dazu verlaufenden Y- Richtung bezüglich in oder auf dem System angeordneten Probenbehältern. Solche Vorrichtungen umfassen zudem Pipetten- oder Dispenser-Spitzen, die sich im wesentlichen vertikal erstrecken und die in einer im wesentlichen senkrecht zu den X- und Y- Richtungen verlaufenden Z-Richtung anhebbar und absenkbar sind. Des Weiteren umfassen solche Vorrichtungen Antriebe zum Bewegen des Robotermanipulators und Prozessoren zum Steuern der Bewegungen und Aktionen des Robotermanipulators bzw. der Pipetten- oder Dispenser-Spitzen.

Für die Verwendung bei der Untersuchung von Genen ("Genomics"), Proteinen ("Proteomics") zum Entdecken von neuen Wirkstoffen ("Drug Discovery") und in der klinischen Diagnose ("Clinical Diagnostics") sind entsprechende Vorrichtungen und Systeme, wie die vom Anmelder unter dem Namen "Genesis Robotic Sample Processor" vertriebene Arbeitsplattform bekannt. Es handelt sich dabei um eine Vorrichtung zum Manipulieren von Proben in Behältern und/oder auf Objektträgern, wobei die Behälter und/oder Objektträger auf einem, im wesentlichen horizontalen Arbeitsfeld mit einer Längsausdehnung X und einer Querausdehnung Y angeordnet sind und wobei die Vorrichtung Robotermanipulatoren zum Manipulieren der Proben umfasst. Dieses Manipulieren kann das Aufnehmen und/oder Abgeben von Flüssigkeiten, z.B. innerhalb dieses X-Y-Feldes betreffen. Ausserdem können Zentrifugen und andere Bearbeitungsstationen oder Analysestationen für Proben, wie Fluoreszenz-Reader und dergleichen vorgesehen sein. Wichtig ist für solche Arbeitsplattformen auch das Identifizieren von Objekten, wie Probenröhrchen, Mikroplatten und andere Proben enthaltende Behälter mit einer entsprechenden Detektionsvorrichtung, wie einem Barcode-Reader oder dergleichen.

Solche bekannten Arbeitsplattformen umfassen zum Zweck des Liquidhandlings vorzugsweise einen Robotermanipulator mit einem sich in Y-Richtung erstreckenden Arm und zumindest einer sich in X-Richtung erstreckenden Schiene, an welcher der Arm in X-Richtung hin und her bewegbar befestigt ist; Pipettenspitzen, die sich im wesentlichen vertikal erstrecken und die in dieser im wesentlichen senkrecht zum Arbeitsfeld verlaufenden Z-Richtung anhebbar und absenkbar sind; sowie Antriebe zum Bewegen des Robotermanipulators und Prozessoren zum Steuern der Bewegungen und Aktionen des Robotermanipulators und/oder der Pipettenspitzen.

Flüssigkeitsproben, welche bearbeitet bzw. untersucht werden sollen, befinden sich üblicherweise in Röhrchen oder in den Wells von Mikroplatten. Solche Röhrchen werden in geeignete Halter gestellt, so dass jeder Halter eine Reihe von Röhrchen aufnehmen kann, welche dadurch in Y-Richtung, also in Richtung der Querausdehnung der Arbeitsplattform in einer Linie nebeneinander angeordnet werden. Diese Halter sind vorzugsweise auf dem Arbeitstisch geführt verschiebbar. Flüssigkeitsproben können sich auch in den Wells von Mikroplatten befinden, bzw. aus den Probenröhrchen in diese Wells umpipettiert worden sein. Dabei werden üblicherweise drei Mikroplatten auf einem sogenannten "Carrier" angeordnet, welcher vorzugsweise ebenfalls auf dem Arbeitstisch geführt verschiebbar ist.

Solche Arbeitsplattformen haben sich vielfach bewährt. Allerdings besteht oft die Notwendigkeit, den Inhalt einzelner Röhrchen oder Wells von Mikroplatten in einen anderen Behälter zu bringen. Dies kann durch Umpipettieren geschehen, was sich insbesondere dann umständlich und zeitraubend gestaltet, wenn z.B. Flüssigkeitsproben aus allen Wells von vier 96-Well Mikroplatten in die Wells einer 384-Well Mikroplatte gebracht werden müssen.

Die Dokumente US2001/0036425 und WO00/35584 offenbaren Vorrichtungen zum Anordnen von Pipettenspitzen die den Inhalt einzelner Wells von Mikroplatten in einen anderen Behälter bringen müssen. Die Vorrichtungen aus US2001/0036425 und WO00/35584 sind Pipettenspitzen, die auslenkbar sind um verschiedene Formate von Mikroplatten anzunehmen.

Die Aufgabe der vorliegenden Erfindung besteht darin, alternative Vorrichtungen und Verfahren vorzuschlagen, mit denen das Umpipettieren von Flüssigkeitsproben in einer Arbeitsplattform rationalisiert werden kann.

Erfindungsgemäss wird diese Aufgabe durch die Merkmalskombinationen der unabhängigen Ansprüche 1 bzw. 12 erfüllt. Zusätzliche erfindungsgemässe Merkmale, Varianten und Verbesserungen ergeben sich aus den abhängigen Ansprüchen.

An Hand von schematischen Zeichnungen sollen nun bevorzugte Ausführungsformen der vorliegenden Erfindung näher erläutert werden, ohne dass der Umfang der Erfindung dabei eingeschränkt werden soll. Dabei zeigen:
- Fig. 1: eine erste schematische Übersicht (Draufsicht) auf eine erfindungsgemässe Vorrichtung, gemäss einer ersten Ausführungsform mit zwei Blöcken;
- Fig. 2: eine weitere schematische Übersicht (Draufsicht) auf eine erfindungsgemässe Vorrichtung, gemäss der ersten Ausführungsform mit zwei Blöcken;
- Fig. 3: eine schematische Übersicht (Draufsicht) auf eine erfindungsgemässe Vorrichtung, gemäss einer zweitem Ausführungsform mit vier Blöcken;
- Fig. 4: einen schematischen Horizontalschnitt durch zwei Blöcke einer erfindungsgemässen Vorrichtung, in einer ersten Position (I);
- Fig. 5: einen schematischen Horizontalschnitt durch zwei Blöcke einer erfindungsgemässen Vorrichtung, in einer zweiten Position (II);
- Fig. 6: einen schematischen Horizontalschnitt durch zwei Blöcke einer erfindungsgemässen Vorrichtung, in einer dritten Position (III);
- Fig. 7: eine teilweise Seitenansicht der Pipetten- oder Dispenser-Spitzen einer erfindungsgemässen Vorrichtung in einer ersten Position (I);
- Fig. 8: eine teilweise Seitenansicht der Pipetten- oder Dispenser-Spitzen einer erfindungsgemässen Vorrichtung in einer zweiten oder dritten Position (II,III).

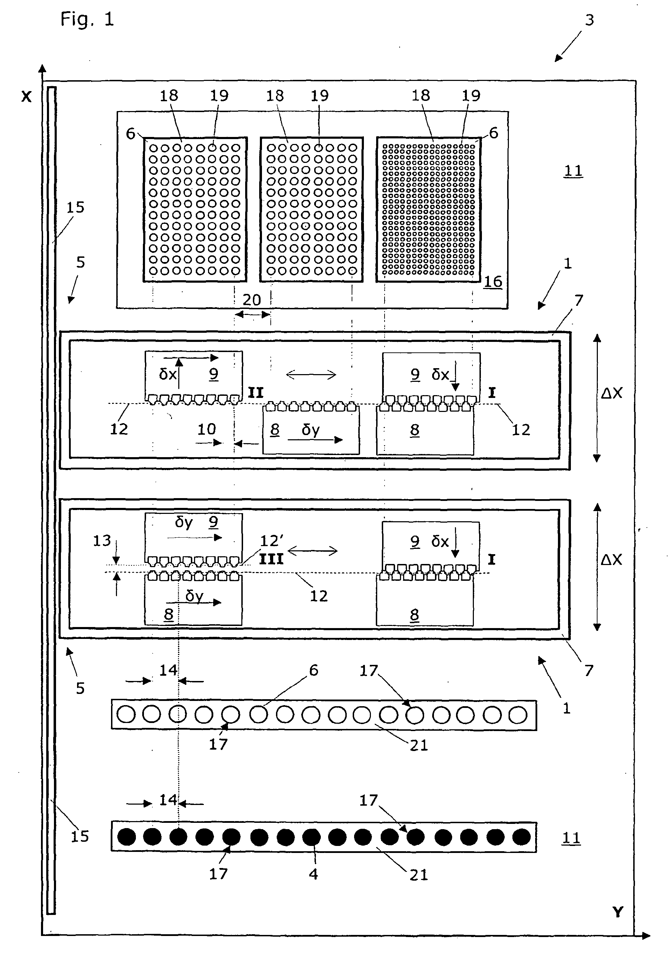

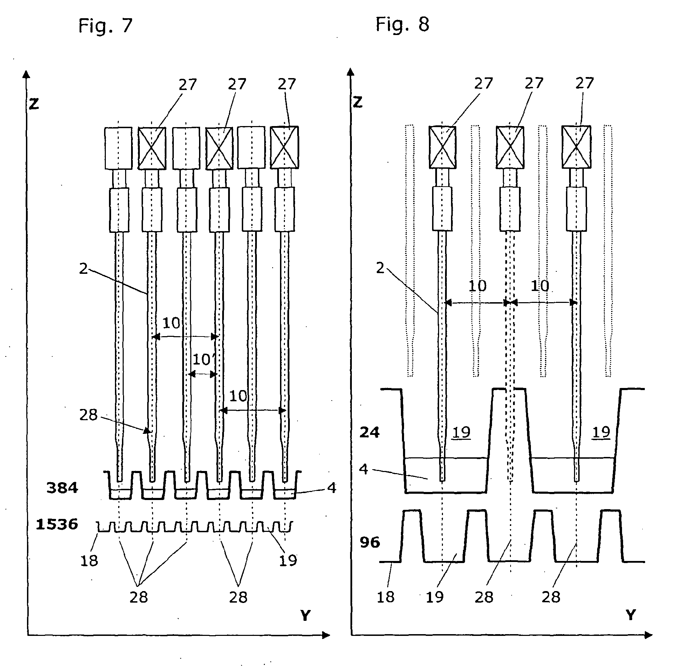

Figur 1 zeigt eine schematische Übersicht (Draufsicht) auf eine erfindungsgemässe Vorrichtung gemäss einer ersten Ausführungsform. Diese Vorrichtung 1 ist zum Anordnen von Pipetten- oder Dispenser-Spitzen 2 (vgl. auch Fig. 7 und 8) in einem System 3 zum Manipulieren von Flüssigkeitsproben 4 ausgebildet. Die Vorrichtung umfasst einen Robotermanipulator 5 zum Ausrichten von Pipetten- oder Dispenser-Spitzen 2 in einer X-Richtung und in einer im wesentlichen rechtwinklig dazu verlaufenden Y- Richtung bezüglich in oder auf dem System 3 angeordneten Probenbehältern 6.

Im Zusammenhang mit der vorliegenden Erfindung werden im Folgenden alle nur möglichen Gefässe oder Unterlagen zum Aufbewahren von Flüssigkeiten als Probenbehälter 6 bezeichnet. Dazu gehören Probenröhrchen 17 (oder "Tubes"), Mikroplatten 18 bzw. deren Töpfchen (oder "Wells 19"), Reagenzien-Flaschen und Tröge (oder "Troughs"). Auch Trays mit erhabenen oder vertieften Oberflächen zur Aufnahme von Proben oder sogar ebene Flächen, wie Objektträger (oder "Slides" z.B. mit darauf angeordneten Arrays von Proben) oder MALDI-TOF Targets mit darauf deponierten Tropfen können als solche Probenbehälter 6 betrachtet werden. Solche Behälter können sowohl als Quelle von aufzunehmenden Flüssigkeitsproben 4 als auch als Ziel von abzugebenden Flüssigkeitsproben dienen. Als solche Zielgefässe können auch Träger für Proben dienen, welche diese Proben teilweise oder ganz in sich aufnehmen, wie z.B. Membranen oder Filter.

Geeignete Systeme, für welche die erfindungsgemässen Vorrichtungen verwendet werden können, umfassen z.B. die unter dem Namen "Genesis Robotic Sample Processor" vertriebene Arbeitsplattform mit einem bevorzugt rechteckigen Arbeitstisch 11. Speziell bewährt haben sich bei diesen Arbeitsplattformen bzw. Systemen 3 auf dem Arbeitstisch 11 angeordnete Carrier 16 auf denen Mikroplat ten 18 mit Wells 19, insbesondere mit 96 oder 384 Wells; bzw. Racks 21, auf denen Probenröhrchen 17 positionierbar sind. Es werden vorzugsweise auch Mikroplatten 18 mit anderen Formaten, wie z.B. 24 oder 1536 Wells 19 eingesetzt.

Die Vorrichtung 1 kann in Systemen 3 mit runden oder sonstwie von der rechteckigen Form abweichenden Arbeitstischen eingesetzt werden, falls diese Pipetten- oder Dispenser-Spitzen 2 verwenden, die sich im wesentlichen vertikal erstrecken und die in einer im wesentlichen senkrecht zu den X- und Y- Richtungen verlaufenden Z-Richtung anhebbar und absenkbar sind. Die erfindungsgemässen Vorrichtungen umfassen zudem Antriebe zum Bewegen des Robotermanipulators 5 sowie Prozessoren zum Steuern der Bewegungen und Aktionen des Robotermanipulators 5 bzw. der Pipetten- oder Dispenser-Spitzen 2. Die Vorrichtung 1 umfasst erfindungsgemäss zumindest zwei an einem Arm 7 des Robotermanipulators 5 angeordnete Blöcke 8,9, an welchen zumindest je zwei Pipetten- oder Dispenser-Spitzen 2 in einem Achsabstand 10 zueinander angeordnet sind. Dieser Achsabstand 10 entspricht im wesentlichen dem Gitterabstand von Wells 19 einer Mikroplatte 18. Bevorzugt sind Vorrichtungen, bei denen die Anzahl der Pipetten- oder Dispenser-Spitzen 2 pro Block 8,9 durch ein ganzzahliges Vielfaches der Zahl 2, insbesondere durch die Zahl 4 oder 8, definiert ist. Vorzugsweise beträgt der Achsabstand 10 zwischen den Pipetten- oder Dispenser-Spitzen 2 in einem Block 8,9 9 mm oder 18 mm.

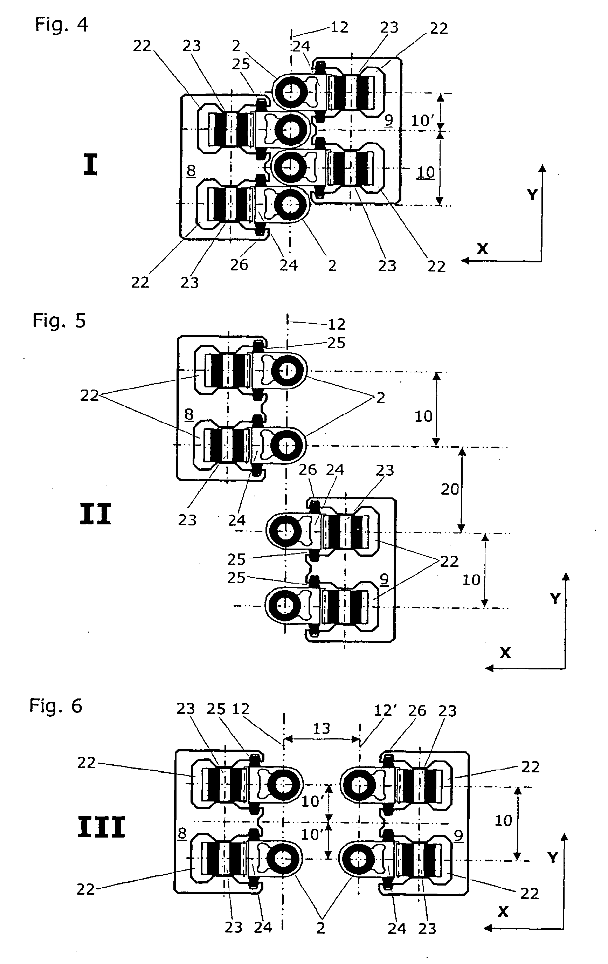

Zumindest einer dieser Blöcke 8,9 der erfindungsgemässen Vorrichtung 1 ist in X-Richtung (kürzere Pfeile) und in Y-Richtung (längere Pfeile) individuell beweglich ausgebildet. Dies erlaubt ein erfindungsgemässes Ausrichten der Pipetten- oder Dispenser-Spitzen 2 der beiden Blöcke 8,9, bei welchem diese Pipetten- oder Dispenser-Spitzen 2 alternierend und verschränkt entlang einer gemeinsamen Linie 12 in einer ersten Position (I; vgl. Fig. 4) angeordnet werden. Speziell bevorzugt sind Blöcke 8,9 mit je 8 Pipetten- oder Dispenser-Spitzen 2, welche in einem Achsabstand 10 von 9mm angeordnet sind. Mit einer solchen Vorrichtung 1 kann eine Reihe Wells 19 einer 96-er Mikroplatte 18 mit den Pipetten- oder Dispenser-Spitzen 2 eines einzigen Blocks 8,9 simultan bearbeitet werden. Dabei können alle Pipetten- oder Dispenser-Spitzen 2 gleichzeitig abgesenkt bzw. angehoben werden. Dies ermöglicht es z.B., Pipetten- oder Dispenser-Spitzen 2 vorzusehen, die unbeweglich an dem diese tragenden Block 8,9 fixiert sind. Dabei ist der Block 8,9 am Arm 7 des Robotermanipulators 5 in Z-Richtung anhebbar und absenkbar ausgebildet.

Solche einfachen Ausführungsformen haben den Vorteil, dass diese pro Block 8,9 ein Umpipettieren von 8 Flüssigkeitsproben 4 aus Mikroplatten mit 96 Wells in Mikroplatten mit 384 Wells, bzw. aus Mikroplatten mit 24 Wells in Mikroplatten mit 96 Wells erlauben (vgl. Fig. 1). Auch der umgekehrte Weg ist jeweils möglich. Allerdings erlauben es solche Blöcke 8,9 mit je vier oder acht daran in einem Achsabstand von 9 mm oder 18 mm fest montierten Pipetten- oder Dispenser-Spitzen 2 nicht, dass Flüssigkeitsproben 4 aus Probenröhrchen 17 aufgenommen werden, die nicht in einem Achsabstand 10 zueinander angeordnet sind, der dem Achsabstand der Wells 19 von Mikroplatten 18 entspricht. Tatsächlich werden oft Racks 21 verwendet, auf welchen üblicherweise 16 Probenröhrchen in einen Achsabstand 14 von 18.8 mm zueinander angeordnet sind. Zur Entnahme von Flüssigkeitsproben 4 aus Probenröhrchen 17 ist es entweder erforderlich, den Achsabstand der Probenröhrchen 17 und der Pipetten- oder Dispenser-Spitzen 2 einander anzupassen oder die Pipetten- oder Dispenser-Spitzen 2 individuell absenkbar bzw. anhebbar auszubilden. Auch das parallele Übertragen von Flüssigkeitsproben aus einer Mikroplatte mit 24 Wells direkt in eine Mikroplatte mit 384 Wells (oder umgekehrt) ist sonst nicht möglich.

Grössere Flexibilität bieten also Pipetten- oder Dispenser-Spitzen 2, die beweglich an dem diese tragenden Block 8,9 fixiert sind, wobei jede der Pipetten- oder Dispenser-Spitzen 2 individuell in Z-Richtung anhebbar und absenkbar ausgebildet ist. Der solche individuell beweglichen Pipetten- oder Dispenser-Spitzen 2 tragende Block 8,9 umfasst dazu die geeigneten Antriebe zum Absenken und Anheben der Pipetten- oder Dispenser-Spitzen 2 (vgl. Fig. 4 bis 6). Im Folgenden wird stillschweigend angenommen, dass es sich immer um Blöcke 8,9 mit solchen individuell in Z-Richtung anhebbar und absenkbar ausgebildeten Pipetten- oder Dispenser-Spitzen 2 handelt.

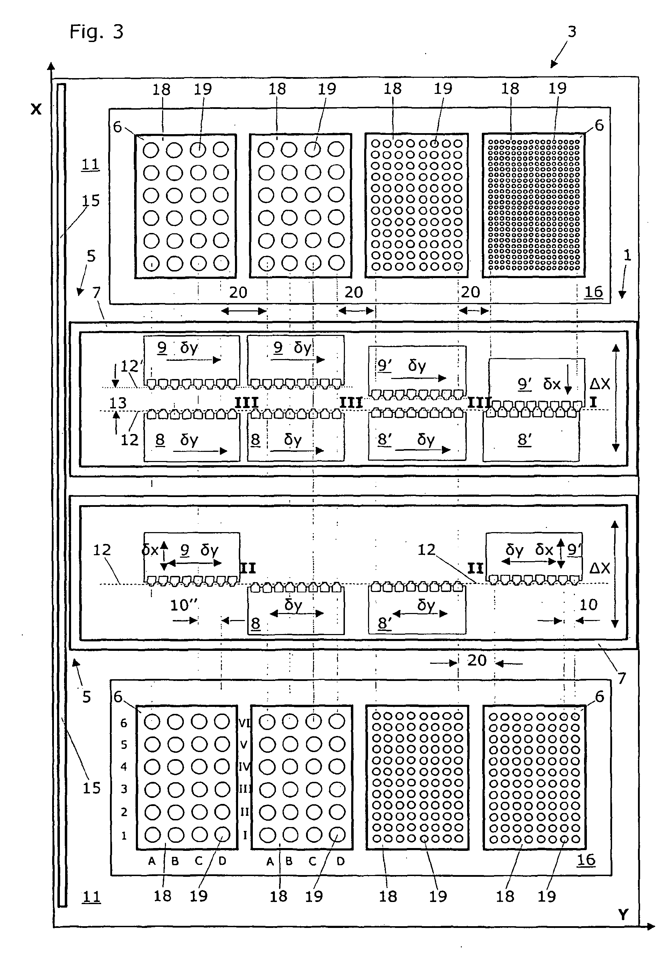

Eine erfindungsgemässe Vorrichtung 1 umfasst vorzugsweise zwei Blöcke 8,9 (vgl. Fig. 1), die zueinander spiegelverkehrt angeordnet sind. Diese Blöcke 8,9 sind vorzugsweise im wesentlichen baugleich ausgebildet, so dass die Herstellungskosten minimiert werden können. Eine erfindungsgemässe Vorrichtung kann aber auch drei oder vier Blöcke umfassen (vgl. Fig. 3). Die Blöcke 8,9 sind zum Teil in X-Richtung (kürzere Pfeile) und in Y-Richtung (längere Pfeile) beweglich.

In der schematischen Übersicht von Figur 1 ist ein System 3 zum Manipulieren von Flüssigkeitsproben 4 abgebildet. Dieses System 3 umfasst einen Arbeitstisch 11 mit mehreren darauf angeordneten Arbeitsfeldern. Diese Arbeitsfelder sind hier als Carrier 16 oder Rack 21 dargestellt, auf welchen Mikroplatten 18 mit Wells 19 oder Probenröhrchen 17 angeordnet sind. Die Probenröhrchen sind in einem Achsabstand 14 von 18.8 mm zueinander angeordnet. Ein alternatives Design für ein Rack 21 für Probenröhrchen 17 umfasst vorzugsweise einen Achsabstand von 18 mm, was gerade dem doppelten Gitterabstand der Wells 19 einer Standard-Mikroplatte entspricht. Ein solches alternatives Design würde sich besonders gut in das Konzept der vorliegenden Erfindung einfügen, weil diese bevorzugt auf einem Gitterabstand der Wells einer 96-er Standard-Mikroplatte von 9 mm, bzw. einem Teil oder einem Vielfachen davon aufbaut: Auf dem Carrier 16 ganz oben sind zwei Mikroplatten 18 mit 96 Wells (mit einem Gitterabstand von 9 mm) sowie eine Mikroplatte 18 mit 384 Wells 19 (mit einem Gitterabstand von 4.5 mm) dargestellt.

Der Robotermanipulator 5 umfasst hier einem kastenförmigen Arm 7, der an einer Schiene 15 in X-Richtung verschiebbar (vgl. Doppelpfeile ΔX) gelagert ist. Im kastenförmigen Arm 7 sind zwei Blöcke 8,9 in Y-Richtung beweglich gelagert. Die X-Richtung entspricht der Längsausdehnung des Arbeitstisches 11 und die Y-Richtung entspricht dessen Querausdehnung.

Im oberen kastenförmigen Arm 7 (vgl. Fig. 1) sind auf der rechten Seite die beiden Blöcke 8,9 in einer ersten Position (I; vgl. Fig. 4) dargestellt. In dieser Position I sind die acht Pipetten- oder Dispenser-Spitzen 2 des ersten Blocks 8 auf einer gemeinsamen Linie 12 und in einem Achsabstand 10 von 9 mm angeordnet. Die acht Pipetten- oder Dispenser-Spitzen 2 des zweiten Blocks 9 sind ebenfalls auf der gemeinsamen Linie 12 und in einem Achsabstand 10 von 9 mm angeordnet. Die Pipetten- oder Dispenser-Spitzen 2 der beiden Blöcke 8,9 sind verschränkt auf der gemeinsamen Linie 12 aufgereiht, so dass immer eine Pipetten- oder Dispenser-Spitze 2 des ersten und zweiten Blocks alternierend auf der gemeinsamen Line 12 platziert wird. In dieser verschränkten Position I der Pipetten- oder Dispenser-Spitzen 2 weisen diese noch einen resultierenden Achsabstand von 4.5 mm auf, welcher gerade dem Gitterabstand der Wells 19 der darüber angeordneten Mikroplatte 18 mit 384 Wells entspricht. In dieser verschränkten Position I der Pipetten- oder Dispenser-Spitzen 2 können also alle 16 Wells einer Reihe in einer solchen 384-er Mikroplatte in einem Vorgang mit den Pipetten- oder Dispenser-Spitzen 2 exakt und simultan erreicht werden. Es ist also möglich, 16 Flüssigkeitsproben 4 aus den Wells 19 einer Reihe simultan zu Aspirieren und in einer Reihe Wells 19 derselben oder einer anderen 384-er Mikroplatte 18 (nicht gezeigt) wieder simultan zu Dispensieren. Während der Bewegung zwischen Aspiration und Dispens können die Blöcke 8,9 in ihrer verschränkten Position I bleiben.

Im oberen kastenförmigen Arm 7 (vgl. Fig. 1) sind auf der linken Seite die beiden Blöcke 8,9 in einer zweiten Position (II; vgl. Fig. 5) dargestellt. In dieser Position II sind die acht Pipetten- oder Dispenser-Spitzen 2 des ersten Blocks 8 auf einer gemeinsamen Linie 12 und in einem Achsabstand 10 von 9 mm angeordnet. Die acht Pipetten- oder Dispenser-Spitzen 2 des zweiten Blocks 9 sind ebenfalls auf der gemeinsamen Linie 12 und in einem Achsabstand 10 von 9 mm angeordnet. Die Pipetten- oder Dispenser-Spitzen 2 der beiden Blöcke 8,9 sind nebeneinander auf der gemeinsamen Linie 12 aufgereiht, so dass sie durch einen Zwischenraum 20 voneinander getrennt sind. In dieser Position II der Pipetten- oder Dispenser-Spitzen 2 weisen diese den ihnen eigenen Achsabstand von 9 mm auf, welcher gerade dem Gitterabstand der Wells 19 der darüber angeordneten Mikroplatte 18 mit 96 Wells entspricht. In dieser Position II der Pipetten- oder Dispenser-Spitzen 2 können also alle 8 Wells in einer Reihe einer solchen 96-er Mikroplatte in einem Vorgang mit den Pipetten- oder Dispenser-Spitzen 2 exakt und simultan erreicht werden. Es ist also möglich, 16 Flüssigkeitsproben 4 aus den je acht Wells 19 einer Reihe von zwei benachbarten 96-er Mikroplatten simultan zu Aspirieren und in einer Reihe Wells 19 derselben oder zweier anderer 96-er Mikroplatten 18 wieder simultan zu Dispensieren. Während der Bewegung zwischen Aspiration und Dispens können die Blöcke 8,9 in ihrer Position II bleiben.

Wird mit den beiden Blöcken 8,9 nun zwischen dem Aspirieren und dem Dispens ein Wechsel von der Position I (rechts) zu der Position II (links) vollzogen, so können 16 Flüssigkeitsproben 4 aus den Wells 19 einer Reihe in einer 384-er Mikroplatte in einem Vorgang simultan aufgenommen und in den je acht Wells 19 einer Reihe von zwei benachbarten 96-er Mikroplatten simultan abgegeben werden. Bei diesem Dispensieren sind die Pipetten- oder Dispenser-Spitzen 2 der beiden Blöcke 8,9 nebeneinander auf einer gemeinsamen Linie 12 aufgereiht, so dass sie durch einen Zwischenraum 20 voneinander getrennt sind. Das Mass für diesen Zwischenraum 20 richtet sich zweckmässigerweise nach dem Abstand der einander nächsten Well-Kolonnen von zwei benachbarten Mikroplatten 18 auf einem Carrier 16. Dieser Abstand kann beispielsweise 25 mm oder 30 mm betragen.

Wird mit den beiden Blöcken 8,9 zwischen dem Aspirieren und dem Dispens ein Wechsel von der Position II (links) zu der Position I (rechts) vollzogen, so können 16 Flüssigkeitsproben 4 aus den je acht Wells 19 einer Reihe von zwei benachbarten 96-er Mikroplatten 18 simultan aufgenommen und in den 16 Wells 19 einer Reihe in einer 384-er Mikroplatte in einem Vorgang simultan abgegeben werden.

Im unteren kastenförmigen Arm 7 (vgl. Fig. 1) sind auf der rechten Seite die beiden Blöcke 8,9 wieder in einer ersten Position (I; vgl. Fig. 4) dargestellt. Auf der linken Seite sind hier die beiden Blöcke 8,9 in einer dritten Position (III; vgl. Fig. 6) angeordnet. In dieser Position III sind die acht Pipetten- oder Dispenser-Spitzen 2 des ersten Blocks 8 auf einer gemeinsamen Linie 12 und in einem Achsabstand 10 von 9 mm angeordnet. Die acht Pipetten- oder Dispenser-Spitzen 2 des zweiten Blocks 9 sind auf einer parallelen Linie 12' und in einem Achsabstand 10 von 9 mm angeordnet. Die Pipetten- oder Dispenser-Spitzen 2 des zweiten Blocks 9 stehen den Pipetten- oder Dispenser-Spitzen 2 des ersten Blocks 8 genau gegenüber. In dieser Position III der Pipetten- oder Dispenser-Spitzen 2 weisen diese den ihnen eigenen Achsabstand von 9 mm auf, welcher gerade dem Gitterabstand der Wells 19 der darüber angeordneten Mikroplatte 18 mit 96 Wells entspricht. Zudem sind die beiden Linien 12,12' gerade um den Gitterabstand von 9 mm von einander entfernt. In dieser Position III der Pipetten- oder Dispenser-Spitzen 2 können also alle 16 Wells von zwei benachbarten Reihen einer solchen 96-er Mikroplatte in einem Vorgang mit den Pipetten- oder Dispenser-Spitzen 2 exakt und simultan erreicht werden. Es ist also möglich, 16 Flüssigkeitsproben 4 aus den je acht Wells 19 von einer dieser beiden Reihen simultan zu Aspirieren und in einer Doppelreihe Wells 19 derselben oder einer anderen 96-er Mikroplatte 18 wieder simultan zu Dispensieren. Während der Bewegung zwischen Aspiration und Dispens können die Blöcke 8,9 in ihrer Position III bleiben.

Wird mit den beiden Blöcken 8,9 nun zwischen dem Aspirieren und dem Dispens ein Wechsel von der Position I (rechts) zu der Position III (links) vollzogen, so können 16 Flüssigkeitsproben 4 aus den Wells 19 einer Reihe in einer 384-er Mikroplatte in einem Vorgang simultan aufgenommen und in den je acht Wells 19 von zwei benachbarten Reihen einer 96-er Mikroplatte simultan abgegeben werden. Bei diesem Dispensieren sind die Pipetten- oder Dispenser-Spitzen 2 der beiden Blöcke 8,9 einander gegenüber auf einer gemeinsamen Linie 12 bzw. auf einer parallelen Linie 12' aufgereiht, so dass sie durch eine Distanz 13 voneinander getrennt sind. Das Mass für diese Distanz 13 richtet sich zweckmässigerweise nach dem Gitterabstand der Wells 19 einer Mikroplatte 18 auf einem Carrier 16. Dieser Abstand beträgt bevorzugt 9 mm, er kann aber auch 18 mm betragen.

Wird mit den beiden Blöcken 8,9 zwischen dem Aspirieren und dem Dispens ein Wechsel von der Position III (links) zu der Position I (rechts) vollzogen, so können 16 Flüssigkeitsproben 4 aus den je acht Wells 19 zweier benachbarter Reihen auf einer 96-er Mikroplatte 18 simultan aufgenommen und in den 16 Wells 19 einer Reihe in einer 384-er Mikroplatte in einem Vorgang simultan abgegeben werden.

Besonders bevorzugt wird ein Liquid-Handling System 3, bei welchem die Blöcke 8,9 der Vorrichtung 1 mit den Pipetten- oder Dispenser-Spitzen 2 im wesentlichen im ganzen Bereich des Arbeitstisches 11 in X-Richtung und in Y-Richtung hin und her beweglich sind. Wie unten in Fig. 1 gezeigt, können auch Racks 21 auf dem Arbeitstisch 11 angeordnet werden, welche zum Tragen von Probenröhrchen 17 geeignet sind. Wie schon erwähnt, können die Pipetten- oder Dispenser-Spitzen 2 nach Bedarf angehoben oder abgesenkt werden, damit Flüssigkeitsproben 4 aus diesen Probenröhrchen 17 entnommen oder in dieselben abgegeben werden können. Die individuellen Bewegungen der Blöcke 8,9 innerhalb des kastenförmigen Arms 7 des Robotermanipulators 5 sind mit ausgefüllten Pfeilen angedeutet und mit δx bzw. δy bezeichnet.

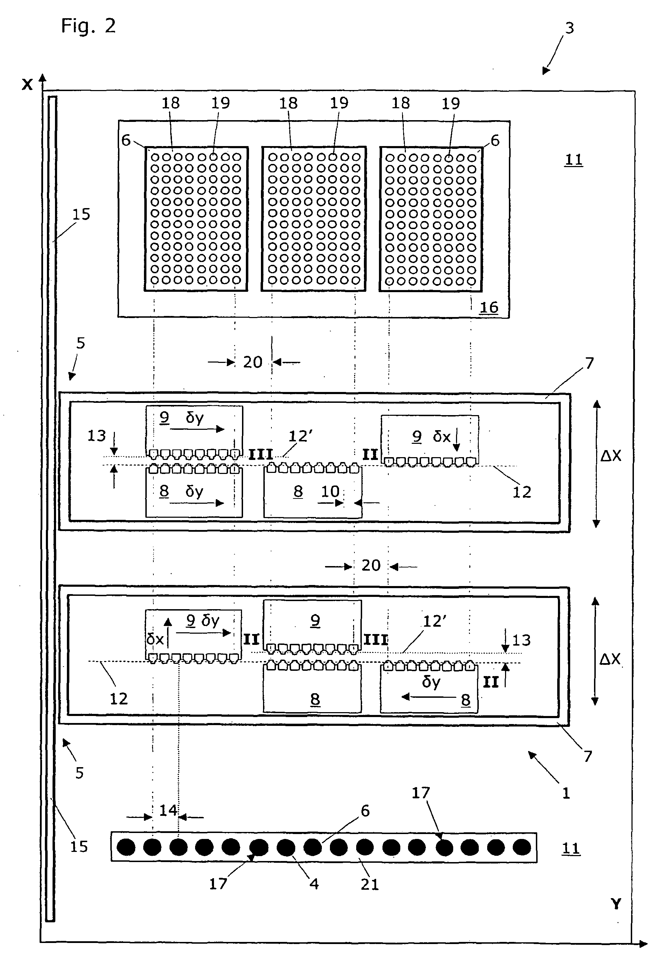

Figur 2 zeigt eine weitere schematische Übersicht (Draufsicht) auf eine erfindungsgemässe Vorrichtung, gemäss der ersten Ausführungsform mit zwei Blöcken. Dabei ist auf dem Arbeitstisch 11 je ein Carrier 16 mit drei 96-er Mikroplatten bzw. ein 16-er Rack 21 für Probenröhrchen 17 platziert. Dazwischen sind zwei Varianten der Anordnung von zwei Blöcken 8,9 mit Pipetten- oder Dispenser-Spitzen 2 gezeigt. Die Blöcke 8,9 sind zum Teil in X-Richtung (kürzere Pfeile) und in Y-Richtung (längere Pfeile) beweglich. Die individuellen Bewegungen der Blöcke 8,9 innerhalb des kastenförmigen Arms 7 des Robotermanipulators 5 sind mit ausgefüllten Pfeilen angedeutet und mit δx bzw. δy bezeichnet.

Im oberen kastenförmigen Arm 7 sind auf der linken Seite die beiden Blöcke 8,9 wieder in der dritten Position III (vgl. Fig. 6) angeordnet. In der Mitte und auf der rechten Seite sind hier die beiden Blöcke 8,9 in einer zweiten Position (II) angeordnet. Wird mit den beiden Blöcken 8,9 zwischen dem Aspirieren und dem Dispens ein Wechsel von der Position III (links) zu der Position II (rechts) vollzogen, so können 16 Flüssigkeitsproben 4 aus den je acht Wells 19 zweier benachbarter Reihen auf einer 96-er Mikroplatte 18 simultan aufgenommen und in den 8 Wells 19 von je einer Reihe zweier nebeneinander angeordneten 96-er Mikroplatten 18 in einem Vorgang simultan abgegeben werden. Somit können Proben aus 16 Wells einer Mikroplatte gleichzeitig auf zwei Mikroplatten der selben Dimension verteilt werden. In umgekehrter Richtung erfolgt ein Sammeln von 2 x 8 Proben von zwei Mikroplatten in 16 Wells einer einzelnen Mikroplatte derselben Grösse.

Im unteren kastenförmigen Arm 7 sind die beiden Blöcke 8,9 wieder in der dritten Position III und in der zweiten Position II angeordnet. Wird mit den beiden Blöcken 8,9 zwischen dem Aspirieren und dem Dispens ein Wechsel von der Position II (links und rechts) zu der Position III (Mitte) vollzogen, so können 16 Flüssigkeitsproben 4 aus den je acht Wells 19 einer entsprechenden Reihe zweier voneinander entfernter 96-er Mikroplatten 18 simultan aufgenommen und in den zwei nebeneinander angeordneten Reihen Wells 19 einer vorzugsweise dazwischen liegenden Mikroplatte 18 in einem Vorgang simultan abgegeben werden. Somit können Proben aus 16 Wells zweier Mikroplatten gleichzeitig auf zwei 8-er Reihen von Wells 19 einer Mikroplatten der selben Dimension gesammelt werden.

In umgekehrter Richtung erfolgt ein Verteilen von 2 x 8 Flüssigkeitsproben von einer einzelnen Mikroplatte in 16 Wells zweier Mikroplatten 18 derselben Grösse. Im Gegensatz zu dem vorstehenden Anwendungsbeispiel hat das hier gezeigte Beispiel den Vorteil, dass die Verfahrwege der Blöcke 8,9 praktisch gleich lang sind, so dass ein Zeitgewinn resultiert.

Des weiteren wird ein Rack 21 verwendet, auf welchem die vorzugsweise 16 Probenröhrchen 17 in einen Achsabstand 14 von 18.8 mm zueinander angeordnet sind. Zur Entnahme von Flüssigkeitsproben 4 aus diesen Probenröhrchen 17 werden die Pipetten- oder Dispenser-Spitzen 2 individuell abgesenkt. Zum Dispens von Flüssigkeitsproben 4 in diese Probenröhrchen 17 werden die Pipetten- oder Dispenser-Spitzen 2 individuell abgesenkt. Diejenigen Pipetten- oder Dispenser-Spitzen 2, die sich nicht im Register mit den Probenröhrchen befinden werden nach Bedarf zusätzlich angehoben, damit Kollisionen verhindert werden.

Figur 3 zeigt eine schematische Übersicht (Draufsicht) auf eine erfindungsgemässe Vorrichtung, gemäss einer zweitem Ausführungsform mit vier Blöcken 8,8',9,9'. Dabei ist auf dem Arbeitstisch 11 je ein Carrier 16 mit vier Mikroplatten 18 deponiert. Der obere Carrier 16 trägt zwei Mikroplatten 18 mit 24 Wells 19 und jeweils eine Mikroplatte 18 mit 96 bzw. 384 Wells. Der untere Carrier 16 trägt je zwei Mikroplatten 18 mit 24 bzw. 96 Wells 19. Dazwischen sind zwei Anwendungsbeispiele angedeutet. Wie schon in den Fig. 1 und 2 bedeutet es hier nicht, dass das System 3 einen Robotermanipulator 5 mit zwei Armen 7 umfassen muss. Obwohl dies nicht ausgeschlossen ist, wird das Anordnen von nur einem Arm 7 mit zwei oder vier Blöcken 8,8',9,9' bevorzugt, weil ein solcher Arm 7 den ganzen Arbeitstisch 11 bedienen kann, ohne dass ein Zusammenstoss mit einem zweiten Arm 7 oder zumindest eine Behinderung durch denselben zu befürchten ist.

Im oberen kastenförmigen Arm 7 sind auf der linken Seite die beiden Blöcke 8,9 wieder in der dritten Position III (vgl. Fig. 6) angeordnet. Dabei beträgt hier die Distanz 13 - entsprechend dem Gitterabstand der Wells 19 der 24-er Mikroplatten - 18 mm. Dieses Mass entspricht dem doppelten Achsabstand der Pipetten- oder Dispenser-Spitzen 2 an den Blöcken 8,9. Somit können für ein Umpipettieren zwischen den 24-er Mikroplatten immer nur die grad- oder ungradzahligen Pipetten- oder Dispenser-Spitzen 2 simultan eingesetzt werden. Dieses Ausführungsbeispiel verdeutlich aber auch, dass es dank der erfindungsgemässen Vorrichtung 1 möglich ist, eine Probenkonzentration direkt (oder nach Bedarf mit einem Zwischenschritt in einer 96-er Mikroplatte) von 24-er Mikroplatten in die Wells einer 384-er Mikroplatte durchzuführen. Werden vier Blöcke 8,8',9,9' eingesetzt, so kann in den beiden 24-er Mikroplatten und gleichzeitig von der 384-er Mikroplatte in die 96-er Mikroplatte umpipettiert werden. Es kann auch vorgesehen sein, dass ein sogenanntes "hit-picking" ausgeführt wird, indem nur gerade die Inhalte einer ausgewählten Anzahl bzw. Positionen von Wells in allen oder ausgewählten Formaten bearbeitet werden. Die individuellen Bewegungen der Blöcke 8,8',9,9' innerhalb des kastenförmigen Arms 7 des Robotermanipulators 5 sind mit ausgefüllten Pfeilen angedeutet und mit δx bzw. δy bezeichnet.

Dem Fachmann wird beim Lesen der vorliegenden Beschreibung sofort klar, dass die aktuelle Erfindung eine grosse Palette von Umpipettier-Möglichkeiten bietet, die alle vom Erfindungsgedanken umfasst sind. Stellvertretend und keinesfalls abschliessend für diese Möglichkeiten soll hier in einem praktischen Beispiel das Verdichten von Proben - ausgehend von zwei 24-er Mikroplatten und hinführend zu einer 96-er Mikroplatte - beschrieben werden. Als Instrument zur Durchführung des Umpipettierens dient ein System 3 mit zwei Blöcken 8,9, in die jeweils 8 Pipettenspitzen 2 im Abstand von 9 mm zueinander eingesetzt sind. Eine ähnliche Konfiguration ist in Fig. 3 (unten) dargestellt, wobei jedoch nur eine der beiden dargestellten 96-er Mikroplatten beschickt werden soll. Das Umpipettieren erfolgt in den folgenden Schritten:

### Aspirieren 1:

Vorzugsweise wird eine Stellung der Blöcke 8,9 gemäss Position II gewählt, so dass alle Pipettenspitzen 2 auf einer gemeinsamen Linie 12 angeordnet sind. Der Arm 7 des Robotermanipulators wird in X-Richtung so weit bewegt, dass diese imaginäre Linie 12 mitten durch die erste Reihe der Wells 19 verläuft. Vorzugsweise werden, wie mit den dünnen Linien, die von den Pipettenspitzen 2 zu den Wells 19 verlaufen (vgl. Fig. 3 unten), angedeutet ist, beim Block 9 nur z.B. die Pipettenspitzen 2 mit einer ungeraden Nummer (1,3,5,7) und beim Block 8 nur die Pipettenspitzen 2 mit gerader Nummer (2,4,6,8) für das bevorstehende Aspirieren ausgewählt. So ist ein Achsenabstand 10" zwischen den Pipettenspitzen 2 von 18 mm definiert, der gerade dem Gitterabstand der Wells der anvisierten 24-er Mikroplatten entspricht. Die beiden Blöcke 8,9 müssen nun noch in Y-Richtung so weit bewegt werden, dass die ausgewählten Pipettenspitzen 2 über dem Zentrum der entsprechenden Wells 19 stehen. Dann werden die ausgewählten Pipettenspitzen 2 in die erste Reihe Wells 19 der beiden Mikroplatten 18 mit 24 Wells 19 abgesenkt.
Eine bestimmte erste Menge Flüssigkeit aus jedem Well 19 der beiden ersten Reihen der 24-er Mikroplatten wird in die unter den Flüssigkeitsspiegel in den Wells 19 abgesenkten Pipettenspitzen 2 eingesogen und danach werden die Pipettenspitzen 2 mit den aufgenommenen Flüssigkeitsproben angehoben.

### Aspirieren 2:

Alle Pipettenspitzen 2 bleiben auf einer gemeinsamen Linie 12 angeordnet. Die Stellung der Blöcke 8,9 gemäss Position II wird nur insoweit verändert, dass der Zwischenraum 20 zwischen den Blöcken 8,9 den nun abzusenkenden Pipettenspitzen 2 angepasst wird. Dazu werden die Blöcke 8,9 in Y-Richtung entsprechend bewegt. Der Arm 7 des Robotermanipulators wird in X-Richtung so weit bewegt, dass diese imaginäre Linie 12 mitten durch die zweite Reihe der Wells 19 verläuft. Dann werden beim Block 9 nur die Pipettenspitzen 2 mit einer geraden Nummer (2,4,6,8) und beim Block 8 nur die Pipettenspitzen 2 mit ungerader Nummer (1,3,5,7) für das bevorstehende Aspirieren ausgewählt. So ist wieder ein Achsenabstand 10" zwischen den Pipettenspitzen 2 von 18 mm definiert, der gerade dem Gitterabstand der Wells der anvisierten 24-er Mikroplatten entspricht. Die ausgewählten Pipettenspitzen 2 der beiden Blöcke 8,9 stehen nun über dem Zentrum der entsprechenden Wells 19. Dann werden die ausgewählten Pipettenspitzen 2 in die zweite Reihe Wells 19 der beiden Mikroplatten 18 mit 24 Wells 19 abgesenkt.
Eine bestimmte erste Menge Flüssigkeit aus jedem Well 19 der beiden zweiten Reihen der 24-er Mikroplatten wird in die unter den Flüssigkeitsspiegel in den Wells 19 abgesenkten Pipettenspitzen 2 eingesogen und danach werden die Pipettenspitzen 2 mit den aufgenommenen Flüssigkeitsproben angehoben.
Alle 16 Pipettenspitzen der beiden Blöcke 8,9 enthalten nun eine bestimmte erste Menge einer aufgenommenen Flüssigkeitsprobe. Diese Proben entstammen den beiden Mikroplatten wie aus der folgenden Tabelle 1 ersichtlich ist. In diesem Beispiel werden die Reihen der Wells der linken Mikroplatte mit arabischen Zahlen und die Reihen der Wells der rechten Mikroplatte mit römischen Zahlen nummeriert. Die Wells jeder Reihe sind von links beginnend jeweils mit einem Buchstaben A-D bezeichnet (vgl. Fig. 3).

**Tabelle 1: Anordnung der aufgenommenen Proben in den Blöcken**

| **Block 9** | | | | | | | | **Block 8** | | | | | | | |
|---|---|---|---|---|---|---|---|---|---|---|---|---|---|---|---|
| Pipettenspitzen | | | | | | | | Pipettenspitzen | | | | | | | |
| 1 | 2 | 3 | 4 | 5 | 6 | 7 | 8 | 1 | 2 | 3 | 4 | 5 | 6 | 7 | 8 |

| Proben | | | | | | | | Proben | | | | | | | |
|---|---|---|---|---|---|---|---|---|---|---|---|---|---|---|---|
| 1A | 2A | 1B | 2B | 1C | 2C | 1D | 2D | IIA | IA | IIB | IB | IIC | IC | IID | ID |

### Transfer:

Alle Pipettenspitzen 2 werden nun auf zwei Linien 12,12', entsprechend Position III angeordnet. Die Stellung der Blöcke 8,9 gemäss Position III wird dabei so verändert, dass sich die Pipettenspitzen 2 der beiden Blöcke 8,9 gerade gegenüberstehen, und dass die beiden Linien 12,12' um den Achsabstand 10 der Pipettenspitzen 2 von 9 mm von einander beabstandet sind. Dazu werden die Blöcke 8,9 in Y-Richtung entsprechend bewegt. Zudem muss zumindest einer der Blöcke 8,9 auch in X-Richtung bewegt werden, um eine relative Distanz von 9 mm zu erreichen. Der Arm 7 des Robotermanipulators 5 wird in X-Richtung so weit bewegt, dass diese imaginäre Linien 12 bzw. 12' mitten durch die erste bzw. zweite Reihe der Wells 19 der anvisierten 96-er Mikroplatte 18 verlaufen. Zudem werden die beiden Blöcke 8,9 als Packet in Y-Richtung bewegt, bis alle Pipettenspitzen über dem Zentrum der entsprechenden Wells 19 der 96-er Mikroplatte stehen. Dann werden alle Pipettenspitzen 2 simultan in die erste bzw. zweite Reihe Wells 19 der Mikroplatte 18 mit 96 Wells 19 abgesenkt.

### Dispens:

Eine bestimmte zweite Menge Flüssigkeit wird aus jeder Pipettenspitze 2 in ein Well 19 der ersten und zweiten Reihe der 96-er Mikroplatten 18 z.B. aus der Luft oder mit Berühren der Oberfläche des Wells 19 oder einer bereits darin vorhandenen Flüssigkeit abgegeben. Die erste und zweite Menge der Flüssigkeitsproben können gleich sein (einmaliges Verdichten in eine 96-Mikroplatte) oder ein unterschiedliches Volumen aufweisen (mehrmaliges Verdichten in mehrere 96-er Mikroplatten 18).

Danach werden die Pipettenspitzen 2 angehoben und falls diese nicht mehr gebraucht werden sollen, in einen Abfallbehälter abgeworfen bzw. gereinigt. Dieser Umpipettier-Vorgang wird noch zweimal (falls notwendig, mit jeweils frischen Wegwerfpipettenspitzen oder mit durchgespülten und gereinigten Stahlspitzen) wiederholt, damit Proben aus sämtlichen Wells 19 der beiden 24-er Mikroplatten auf die 96-er Mikroplatte übertragen werden. Falls dies gewünscht wird, können entsprechend Proben von zwei weiteren 24-er Mikroplatten 18 auf die 96-er Mikroplatte übertragen werden (nicht gezeigt).

Alle 2 x 24 derart auf eine 96-er Mikroplatte übertragenen Proben sind in diesem Beispiel gemäss Tabelle 2 angeordnet.

**Tabelle 2: Anordnung der abgegebenen Proben in der 96-er Mikroplatte**

| | Kolonne | | | | | | | |
|---|---|---|---|---|---|---|---|---|
| Reihe | A | B | C | D | E | F | G | H |
| 12 | | | | | | | | |
| 11 | | | | | | | | |
| 10 | | | | | | | | |
| 9 | | | | | | | | |
| 8 | | | | | | | | |
| 7 | | | | | | | | |
| 6 | 5A | 6A | 5B | 6B | 5C | 6C | 5D | 6D |
| 5 | VIA | VA | VIB | VB | VIC | VC | VID | VD |
| 4 | 3A | 4A | 3B | 4B | 3C | 4C | 3D | 4D |
| 3 | IVA | IIIA | IVB | IIIB | IVC | IIIC | IVD | IIID |
| 2 | 1A | 2A | 1B | 2B | 1C | 2C | 1D | 2D |
| 1 | IIA | IA | IIB | IB | IIC | IC | IID | ID |

Werden die Blöcke alternativ angeordnet, so dass im ersten Aspirationsschritt beim Block 8 Pipettenspitzen 2 mit ungeraden und bei Block 9 solche mit geraden Nummern verwendet werden, so entsteht entsprechend eine andere Anordnung der Proben in der 96-er Mikroplatte. Auch könnte die gegenseitige Stellung der Blöcke 8 und 9 in Position II vertauscht sein. Des weiteren könnte die Aspiration stattfinden, indem die Blöcke 8,9 in Position III statt in Position II stehen. Unabhängig davon, welche Variante auch gewählt wird, immer lässt sich der Weg einer jeden Probe von der Ausgangsposition in der 24-er Mikroplatte bis zur Endposition in der 96-er Mikroplatte logisch und eindeutig verfolgen. Diese Aussage gilt selbstverständlich auch für die umgekehrte Operation, wenn Proben aus einer 96-er Mikroplatte in zwei bzw. vier 24-er Mikroplatten verteilt werden sollen.

Sinngemäss lässt sich dieses Beispiel auf alle möglichen Arten des Umpipettierens übertragen, bei welchen beliebige Behälter, wie z.B. Probenröhrchen und Mikroplatten, sowie beliebige Anordnungen der Blöcke 8,9 in den Positionen I, II oder III verwendet werden. Die Verfahrwege der Blöcke 8,9 können dank der erfindungsgemässen Vorrichtung 1 sehr klein gehalten werden und es können jeweils 16 Proben simultan in die 96-er Mikroplatte abgegeben oder aus einer solchen aufgenommen werden. Dadurch ergibt sich eine Zeitersparnis für den Vorgang des Umpipettierens gegenüber von Systemen, wie sie aus dem Stand der Technik bekannt sind.

Im unteren kastenförmigen Arm 7 sind die vier Blöcke 8,8',9,9' paarweise in der zweiten Position II angeordnet. In dieser Anordnung kann - wie am Beispiel von 24-er und 96-er Mikroplatten gezeigt - auch ein effizienter Dispens von Flüssigkeitsproben 4 in unterschiedliche Mikroplattenformate ausgeführt werden.

Figur 4 zeigt einen schematischen Horizontalschnitt durch zwei Blöcke 8,9 einer erfindungsgemässen Vorrichtung 1, in einer ersten Position (I). In dieser Position I sind alle Pipetten- oder Dispenser-Spitzen 2 des ersten Blocks 8 auf einer gemeinsamen Linie 12 und in einem Achsabstand 10 angeordnet, der vorzugsweise gerade dem Gitterabstand der Wells 19 einer Mikroplatte 18 entspricht. Der Achsabstand 10 beträgt vorzugsweise 9 mm (entsprechend dem Gitterabstand einer 96-er Mikroplatte), er kann aber auch 18 mm (entsprechend dem Gitterabstand einer 24-er Mikroplatte) oder ein anderes geeignetes Mass aufweisen. Die Pipetten- oder Dispenser-Spitzen 2 des zweiten Blocks 9 sind ebenfalls auf der gemeinsamen Linie 12 und im gleichen Achsabstand 10 angeordnet. Die Pipetten- oder Dispenser-Spitzen 2 der beiden Blöcke 8,9 sind verschränkt auf der gemeinsamen Linie 12 aufgereiht, so dass immer eine Pipetten- oder Dispenser-Spitze 2 des ersten und zweiten Blocks alternierend auf der gemeinsamen Line 12 angeordnet ist. In dieser verschränkten Position I der Pipetten- oder Dispenser-Spitzen 2 weisen diese noch einen resultierenden Achsabstand 10' auf, welcher gerade dem halben Gitterabstand der Wells 19 einer Mikroplatte 18 entspricht. Die Blöcke 8,9 sind hier der Einfachheit halber mit je nur zwei Pipetten- oder Dispenser-Spitzen 2 dargestellt. Vorzugsweise umfasst jeder dieser Blöcke 8,9 jedoch 8 Pipetten- oder Dispenser-Spitzen 2.

Jeder Block 8,9 weist Käfigstrukturen 22 auf. Jede dieser Käfigstrukturen 22 umfasst ein Ritzel 23 welches in die Zähne einer Zahnstange 24 eingreift. Die Zahnstangen 24 eines Blocks 8,9 sind im gleichen Achsabstand 10 wie die Pipetten- oder Dispenser-Spitzen 2 neben einander angeordnet und erstrecken sich in der Z-Richtung. An je einer Zahnstange 24 ist eine dieser Pipetten- oder Dispenser-Spitzen 2 befestigt und damit individuell in der im wesentlichen senkrecht zum Arbeitstisch 11 verlaufenden Z-Richtung beweglich ausgebildet. Die Antriebe für die Ritzel 23 befinden sich bevorzugt an jedem Block 8,9.

Die Zahnstangen 24 sind über einen Z-Verfahrweg beweglich ausgebildet, in dem sie mit je einem motorisch individuell angetriebenen, vorzugsweise eine Anpresskraft auf die jeweilige Zahnstange 24 ausübenden Ritzel 23 eines Z-Antriebs (nicht gezeigt) im Eingriff stehen. Die Zahnstangen 24 umfassen zwei seitlich in Y-Richtung abstehende und sich in Z-Richtung erstreckende Z-Schienen 25, welche in Z-Führungen 26 einer zugeordneten, das individuelle Ritzel 23 tragenden Käfigstruktur 22 gleitend gelagert sind. In der gezeigten Position I sind die Zahnstangen 24 zusammen mit der jeweils zugeordneten Käfigstruktur 22 der Blöcke 8,9 nebeneinander entlang der sich in Y-Richtung ausdehnenden, gemeinsamen Linie 12 alternierend so angeordnet, dass die Käfigstrukturen 22 abwechselnd vor oder hinter der gemeinsamen Linie 12 liegen.

Figur 5 zeigt einen schematischen Horizontalschnitt durch zwei Blöcke 8,9 einer erfindungsgemässen Vorrichtung 1, in einer zweiten Position (II). In dieser Position II sind alle Pipetten- oder Dispenser-Spitzen 2 des ersten Blocks 8 auf einer gemeinsamen Linie 12 und in einem Achsabstand 10 angeordnet, der vorzugsweise gerade dem Gitterabstand der Wells 19 einer Mikroplatte 18 entspricht. Der Achsabstand 10 beträgt vorzugsweise 9 mm (entsprechend dem Gitterabstand einer 96-er Mikroplatte), er kann aber auch 18 mm (entsprechend dem Gitterabstand einer 24-er Mikroplatte) oder ein anderes geeignetes Mass aufweisen. Die Pipetten- oder Dispenser-Spitzen 2 des zweiten Blocks 9 sind ebenfalls auf der gemeinsamen Linie 12 und im gleichen Achsabstand 10 angeordnet. Die Pipetten- oder Dispenser-Spitzen 2 der beiden Blöcke 8,9 sind nebeneinander auf der gemeinsamen Linie 12 aufgereiht, so dass sie durch einen Zwischenraum 20 (vgl. auch Fig. 1) voneinander getrennt sind.

Die beiden Blöcke 8,9 sind vorzugsweise spiegelsymmetrisch gebaut und wurden mit Bezug auf Fig. 4 bereits im Zusammenhang mit den Käfigstrukturen 22, den Ritzeln 23, den Zahnstangen 24, den Z-Schienen 25 und den Z-Führungen 26 beschrieben. In der gezeigten Position II sind die Zahnstangen 24 zusammen mit der jeweils zugeordneten Käfigstruktur 22 der Blöcke 8,9 neben einander entlang der sich in Y-Richtung ausdehnenden, gemeinsamen Linie 12 so aufgereiht, dass die letzte Käfigstruktur 22 des Blocks 8 durch einen Zwischenraum 20 (vgl. auch Fig. 1) von der ersten Käfigstruktur 22 des Blocks 9 getrennt ist.

Figur 6 zeigt einen schematischen Horizontalschnitt durch zwei Blöcke 8,9 einer erfindungsgemässen Vorrichtung 1 gemäss Fig. 4 oder 5, aber in einer dritten Position (III). In dieser Position III sind alle Pipetten- oder Dispenser-Spitzen 2 des ersten Blocks 8 auf einer gemeinsamen Linie 12 und in einem Achsabstand 10 angeordnet, der vorzugsweise gerade dem Gitterabstand der Wells 19 einer Mikroplatte 18 entspricht. Der Achsabstand 10 beträgt vorzugsweise 9 mm (entsprechend dem Gitterabstand einer 96-er Mikroplatte), er kann aber auch 18 mm (entsprechend dem Gitterabstand einer 24-er Mikroplatte) oder ein anderes geeignetes Mass aufweisen. Die Pipetten- oder Dispenser-Spitzen 2 des zweiten Blocks 9 sind gegenüber den Pipetten- oder Dispenser-Spitzen 2 des ersten Blocks 8 auf der parallelen Linie 12' und im gleichen Achsabstand 10 angeordnet.

Figur 7 zeigt eine teilweise Seitenansicht der Pipetten- oder Dispenser-Spitzen 2 einer erfindungsgemässen Vorrichtung 1 in einer ersten Position (I). Die Halterungen 27 der Pipetten- oder Dispenser-Spitzen 2 des ersten Blocks 8 sind durch ein Kreuz markiert. Die Pipetten- oder Dispenser-Spitzen 2 des ersten und zweiten Blocks 8,9 sind in einem Achsabstand 10 zueinander angeordnet. Dieser Achsabstand 10 beträgt hier 9 mm. Der aus der verschränkten Position I der Pipetten- oder Dispenser-Spitzen 2 resultierende, halbe Achsabstand beträgt demzufolge 4.5 mm. Alle Pipetten- oder Dispenser-Spitzen 2 der beiden Blocks 8,9 sind abgesenkt und tauchen in die Wells 19 einer Mikroplatte 18 mit 384 Wells ein. Die Figur 7 zeigt eine beispielhafte Situation nach dem Dispens einer Flüssigkeitsprobe 4 in jedes der Wells 19. Darunter ist ein Ausschnitt aus einer 1536-er Mikroplatte gezeigt. Die eingezeichneten Achsen 28 der Pipetten- oder Dispenser-Spitzen 2 treffen in jedes Well 19 einer Reihe bei der 384-er Mikroplatte (mit 384 bezeichnet). Dagegen wird nur in jedes zweite Well 19 der Mikroplatte (mit 1536 bezeichnet) mit der höchsten Dichte von 1536 Wells 19 getroffen.

Figur 8 zeigt eine teilweise Seitenansicht der Pipetten- oder Dispenser-Spitzen 2 einer erfindungsgemässen Vorrichtung 1 in einer zweiten oder dritten Position II,III). Die Halterungen 27 der Pipetten- oder Dispenser-Spitzen 2 des ersten Blocks 8 sind durch ein Kreuz markiert. Die Pipetten- oder Dispenser-Spitzen 2 des zweiten Blocks 9 sind aus der Position I (gepunktet, nicht abgesenkt) entfernt und entweder neben oder hinter den Pipetten- oder Dispenser-Spitzen 2 gemäss der zweiten Position II oder der dritten Position III angeordnet (nicht gezeigt). Der Achsabstand 10 beträgt hier ebenfalls 9 mm. Wird nur jede zweite Pipetten- oder Dispenser-Spitze 2 des ersten Blocks 8 abgesenkt, so tauchen die abgesenkten Spitzen (ausgezogen gezeichnet) in die Wells 19 einer Mikroplatte 18 mit 24 Wells ein. Die jeweils benachbarten Spitzen (gestrichelt gezeichnet) können nicht abgesenkt oder müssen sogar angehoben werden, damit diese nicht mit der Oberfläche der Mikroplatte 18 (mit 24 bezeichnet) kollidieren. Die Figur 8 zeigt eine beispielhafte Situation während dem Aspirieren einer Flüssigkeitsprobe 4 aus jedem der Wells 19 einer 24-er Mikroplatte. Darunter ist ein Ausschnitt aus einer 96-er Mikroplatte gezeigt. Die eingezeichneten Achsen 28 der Pipetten- oder Dispenser-Spitzen 2 treffen in jedes Well 19 einer Reihe bei dieser 96-er Mikroplatte (mit 96 bezeichnet), so dass zur Bearbeitung einer solchen Mikroplatte alle Pipetten- oder Dispenser-Spitzen 2 eines Blockes 8,9 abgesenkt werden können. Dies natürlich unter der Voraussetzung, dass der Achsabstand 10 9 mm beträgt.

Wie schon weiter oben beschrieben, können einzelne Pipetten- oder Dispenser-Spitzen 2 beliebig und individuell abgesenkt werden, damit Flüssigkeitsproben 4 aus Probenröhrchen 17, aus bestimmten, einzelnen Wells 19 einer Mikroplatte 18 oder aus Mikroplatten 18 aufgenommen werden können, welche eine Gitterkonstante der Wellsanordnung aufweisen, die nicht mit dem Achsabstand 10 der Pipetten- oder Dispenser-Spitzen 2 der erfindungsgemässen Vorrichtung 1 übereinstimmt.

Das erfindungsgemässe Verfahren zum Anordnen von Pipetten- oder Dispenser-Spitzen 2 in einem System 3 zum Manipulieren von Flüssigkeitsproben 4 umfasst die Verwendung zumindest einer soeben beschriebenen Vorrichtung 1. Das erfindungsgemässe Verfahren ist dadurch gekennzeichnet, dass die Vorrichtung 1 zumindest zwei an einem Arm 7 des Robotermanipulators 5 angeordnete Blöcke 8,9 umfasst, an welchen zumindest zwei Pipetten- oder Dispenser-Spitzen 2 in einem Achsabstand 10 zueinander angeordnet sind. Wobei dieser Achsabstand 10 im wesentlichen dem Gitterabstand von Wells 19 einer Mikroplatte 18 entspricht. Dabei wird zumindest einer dieser Blöcke 8,9 individuell in X-Richtung und in Y-Richtung bewegt, so dass die Pipetten- oder Dispenser-Spitzen 2 der beiden Blöcke 8,9 alternierend und verschränkt entlang einer gemeinsamen Linie 12 ausgerichtet werden und eine erste Position (I) einnehmen. Mit dem erfindungsgemässen Verfahren werden zudem zwei Blöcke 8,9 nebeneinander und mit einem Zwischenraum 20 zueinander angeordnet, so dass die Pipetten- oder Dispenser-Spitzen 2 entlang der gemeinsamen Line 12 angeordnet sind und eine zweite Position (II) einnehmen. Mit dem erfindungsgemässen Verfahren werden ausserdem die Blöcke 8,9 einander gegenüber in einer Distanz 13 praktisch spiegelsymmetrisch angeordnet, so dass sich die Pipetten- oder Dispenser-Spitzen 2 in zwei beabstandeten Linien 12,12' gegenüber stehen und eine dritte Position (III) einnehmen.

Durch ein Umgruppieren der Blöcke 8,9 mit den Pipetten- oder Dispenser-Spitzen 2 kann - ausgehend von der ersten Position I und hinführend zu der zweiten Position II oder zu der dritten Position III - ein Umpipettieren und Verteilen der Flüssigkeitsproben 4 aus einer 384-Well Mikroplatte zu 96-Well Mikroplatten ausgeführt werden.

Durch ein Umgruppieren der Blöcke 8,9 mit den Pipetten- oder Dispenser-Spitzen 2 kann - ausgehend von der zweiten Position II oder von der dritten Position III und hinführend zu der ersten Position I - ein Umpipettieren und Verdichten der Flüssigkeitsproben 4 aus 96-Well Mikroplatten 18 zu einer 384-Well Mikroplatte 18 ausgeführt werden.

Ohne Umgruppieren der Blöcke 8,9 mit den Pipetten- oder Dispenser-Spitzen 2 kann - unter Beibehalten der ersten Position I, der zweiten Position II oder der dritten Position III - ein Umpipettieren der Flüssigkeitsproben 4 aus beliebigen Mikroplatten 18 in Mikroplatten mit identischer Grösse bzw. mit identischem Format ausgeführt werden. Somit kann mit vorzugsweise 16 simultan verwendeten Pipetten- oder Dispenser-Spitzen 2 der Inhalt von Mikroplatten 18 zeitsparend kopiert oder repliziert werden.

Durch ein individuelles Absenken der Pipetten- oder Dispenser-Spitzen 2 kann - ausgehend von der ersten, zweiten oder dritten Position und hinführend zu der ersten Position I - ein Umpipettieren der Flüssigkeitsproben 4 aus Probenröhrchen 17 oder aus 24-Well Mikroplatten in eine 96-Well oder in eine 384-Well Mikroplatte 18 ausgeführt werden.

Durch ein individuelles Absenken der Pipetten- oder Dispenser-Spitzen 2 kann - ausgehend von der ersten Position I und hinführend zu der ersten, zweiten oder dritten Position - ein Umpipettieren der Flüssigkeitsproben 4 aus einer 96-Well oder einer 384-Well Mikroplatte 18 in Probenröhrchen 17 oder in 24-Well Mikroplatten ausgeführt werden.

Für bestimmte Operationen, Pipettieren und/oder Dispensieren, an 24-er Mikroplatten oder Racks 21 mit Probenröhrchen 17 kann es vorteilhaft sein, dass nicht auf das Absenken von nicht ausgewählten Pipetten- oder Dispenserspitzen 2 verzichtet wird, sondern dass die nicht zur Arbeit bestimmten Plätze in den Blöcken 8,9 gar nicht mit Pipetten- oder Dispenserspitzen 2 bestückt werden.

Alle für das Aufnehmen und Abgeben von Flüssigkeitsproben 4 (Pipettieren) angeführten Beispiele und Bemerkungen gelten sinngemäss auch für das reine Abgeben solcher Proben (Dispensieren). Die Bezugszeichen in den Figuren beziehen sich jeweils auf entsprechende Teile der Vorrichtung, auch wenn in der Beschreibung nicht näher darauf Bezug genommen wurde. Sinnvolle Kombinationen der gezeigten bzw. beschriebenen Ausführungsbeispiele gehören mit zum Umfang der Erfindung.

## Patentansprüche

1. Vorrichtung (1) zum Anordnen von Pipetten- oder Dispenser-Spitzen (2) in einem System (3) zum Manipulieren von Flüssigkeitsproben (4), wobei diese Vorrichtung (1) umfasst:
• Einen Robotermanipulator (5) zum Ausrichten von Pipetten- oder Dispenser-Spitzen (2) in einer X-Richtung und in einer im wesentlichen rechtwinklig dazu verlaufenden Y- Richtung bezüglich in oder auf dem System (3) angeordneten Probenbehältern (6);
• Pipetten- oder Dispenser-Spitzen (2), die sich im wesentlichen vertikal erstrecken und die in einer im wesentlichen senkrecht zu den X- und Y-Richtungen verlaufenden Z-Richtung anhebbar und absenkbar sind;
• Antriebe zum Bewegen des Robotermanipulators (5); und
• Prozessoren zum Steuern der Bewegungen und Aktionen des Robotermanipulators (5) bzw. der Pipetten- oder Dispenser-Spitzen (2);
**dadurch gekennzeichnet, dass** die Vorrichtung (1) zumindest zwei an einem Arm (7) des Robotermanipulators (5) angeordnete Blöcke (8,9) umfasst, an welchen zumindest je zwei Pipetten- oder Dispenser-Spitzen (2) in einem Achsabstand (10) zueinander angeordnet sind, der im wesentlichen dem Gitterabstand von Wells (19) einer Mikroplatte (18) entspricht, wobei zumindest einer dieser Blöcke (8,9) - zum alternierend verschränkten Ausrichten der Pipetten- oder Dispenser-Spitzen (2) der beiden Blöcke (8,9) entlang einer gemeinsamen Linie (12) - in X-Richtung und in Y-Richtung individuell beweglich ausgebildet ist.

2. Vorrichtung nach Anspruch 1, **dadurch gekennzeichnet, dass** die Pipetten- oder Dispenser-Spitzen (2) unbeweglich an dem diese tragenden Block (8,9) fixiert sind, wobei der Block (8,9) in Z-Richtung anhebbar und absenkbar ausgebildet ist.

3. Vorrichtung nach Anspruch 1, **dadurch gekennzeichnet, dass** die Pipetten- oder Dispenser-Spitzen (2) beweglich an dem diese tragenden Block (8,9) fixiert sind, wobei jede der Pipetten- oder Dispenser-Spitzen (2) individuell in Z-Richtung anhebbar und absenkbar ausgebildet ist.

4. Vorrichtung nach einem der vorhergehenden Ansprüche, **dadurch gekennzeichnet, dass** jeweils zwei der Blöcke (8,9) im wesentlichen baugleich ausgebildet und zueinander spiegelverkehrt angeordnet sind.

5. Vorrichtung nach Anspruch 4, **dadurch gekennzeichnet, dass** die Blöcke (8,9) nebeneinander und mit einem Zwischenraum (20) zueinander anordenbar sind, so dass die Pipetten- oder Dispenser-Spitzen (2) entlang der gemeinsamen Line (12) angeordnet sind.

6. Vorrichtung nach Anspruch 4, **dadurch gekennzeichnet, dass** die Blöcke (8,9) einander gegenüber in einer Distanz (13) spiegelsymmetrisch anordenbar sind, so dass sich die Pipetten- oder Dispenser-Spitzen (2) in zwei beabstandeten Linien (12,12') gegenüber stehen.

7. Vorrichtung nach einem der vorhergehenden Ansprüche, **dadurch gekennzeichnet, dass** die Anzahl der Pipetten- oder Dispenser-Spitzen (2) pro Block (8,9) durch ein ganzzahliges Vielfaches der Zahl 2, insbesondere durch die Zahl 4 oder 8, definiert ist.

8. Vorrichtung nach einem der vorhergehenden Ansprüche, **dadurch gekennzeichnet, dass** der Achsabstand (10) zwischen den Pipetten- oder Dispenser-Spitzen (2) in einem Block (8,9) 4.5 mm, 9 mm oder 18 mm beträgt.

9. System (3) zum Manipulieren von Flüssigkeitsproben (4) mit zumindest einem im wesentlichen horizontalen Arbeitsfeld (11) und darauf anordenbaren Probenbehältern (6), **dadurch gekennzeichnet, dass** es zumindest eine Vorrichtung (1) zum Anordnen von Pipetten- oder Dispenser-Spitzen (2) nach einem der vorhergehenden Ansprüche umfasst.

10. System (3) nach Anspruch 9, **dadurch gekennzeichnet, dass** die Blöcke (8,9) der Vorrichtung (1) mit den Pipetten- oder Dispenser-Spitzen (2) im wesentlichen im ganzen Bereich des Arbeitstisches (11) in X-Richtung und in Y-Richtung hin und her beweglich sind.

11. System (3) nach Anspruch 10, **dadurch gekennzeichnet, dass** es zumindest einen Carrier (16) oder ein Rack (21) umfasst, auf welchem Mikroplatten (18) mit Wells (19), insbesondere mit 96 oder 384 Wells, oder Probenröhrchen (17) positionierbar sind.

12. Verfahren zum Anordnen von Pipetten- oder Dispenser-Spitzen (2) in einem System (3) zum Manipulieren von Flüssigkeitsproben (4) mit einer Vorrichtung (1), die umfasst:
• Einen Robotermanipulator (5) zum Ausrichten von Pipetten- oder Dispenser-Spitzen (2) in einer X-Richtung und in einer im wesentlichen rechtwinklig dazu verlaufenden Y- Richtung bezüglich in oder auf dem System (3) angeordneten Probenbehältern (6);
• Pipetten- oder Dispenser-Spitzen (2), die sich im wesentlichen vertikal erstrecken und die in einer im wesentlichen senkrecht zu den X- und Y-Richtungen verlaufenden Z-Richtung anhebbar und absenkbar sind;
• Antriebe zum Bewegen des Robotermanipulators (5); und
• Prozessoren zum Steuern der Bewegungen und Aktionen des Robotermanipulators (5) bzw. der Pipetten- oder Dispenser-Spitzen (2);
**dadurch gekennzeichnet, dass** die Vorrichtung (1) zumindest zwei an einem Arm (7) des Robotermanipulators (5) angeordnete Blöcke (8,9) umfasst, an welchen zumindest je zwei Pipetten- oder Dispenser-Spitzen (2) in einem Achsabstand (10) zueinander angeordnet sind, der im wesentlichen dem Gitterabstand von Wells (19) einer Mikroplatte (18) entspricht, wobei zumindest einer dieser Blöcke (8,9) individuell in X-Richtung und in Y-Richtung bewegt wird, so dass die Pipetten- oder Dispenser-Spitzen (2) der beiden Blöcke (8,9) alternierend und verschränkt entlang einer gemeinsamen Linie (12) ausgerichtet werden und eine erste Position (I) einnehmen.

13. Verfahren nach Anspruch 12, **dadurch gekennzeichnet, dass** zwei Blöcke (8,9) nebeneinander und mit einem Zwischenraum (20) zueinander angeordnet werden, so dass die Pipetten- oder Dispenser-Spitzen (2) entlang der gemeinsamen Line (12) angeordnet sind und eine zweite Position (II) einnehmen.

14. Verfahren nach Anspruch 12, **dadurch gekennzeichnet, dass** die Blöcke (8,9) einander gegenüber in einer Distanz (13) spiegelsymmetrisch angeordnet werden, so dass sich die Pipetten- oder Dispenser-Spitzen (2) in zwei beabstandeten Linien (12,12') gegenüber stehen und eine dritte Position (III) einnehmen.

15. Verfahren nach einem oder mehreren der Ansprüche 12 bis 14, **dadurch gekennzeichnet, dass** durch ein Umgruppieren der Blöcke (8,9) die Pipetten- oder Dispenser-Spitzen (2) - ausgehend von der ersten Position gemäss Anspruch 12 und hinführend zu der zweiten Position gemäss Anspruch 13 oder zu der dritten Position gemäss Anspruch 14 - ein Umpipettieren und Verteilen der Flüssigkeitsproben (4) aus einer 384-Well Mikroplatte zu 96-Well Mikroplatten ausgeführt wird.

16. Verfahren nach einem oder mehreren der Ansprüche 12 bis 14, **dadurch gekennzeichnet, dass** durch ein Umgruppieren der Blöcke (8,9) die Pipetten- oder Dispenser-Spitzen (2) - ausgehend von der zweiten Position gemäss Anspruch 13 oder von der dritten Position gemäss Anspruch 14 und hinführend zu der ersten Position gemäss Anspruch 12 - ein Umpipettieren und Verdichten der Flüssigkeitsproben (4) aus 96-Well Mikroplatten zu einer 384-Well Mikroplatte ausgeführt wird.

17. Verwendung einer Vorrichtung (1) gemäss einem der Ansprüche 1 bis 8 oder eines Systems (3) gemäss einem der Ansprüche 9 bis 11 zum Pipettieren oder Dispensieren von Flüssigkeitsproben (4), **dadurch gekennzeichnet, dass** Flüssigkeitsproben (4) aus zumindest einem Probenbehälter (6) oder von zumindest einem Träger entnommen und Blöcke 8,8',9,9' in zumindest einer Position (I,II,III) gemäss einem der Ansprüche 12 bis 14 angeordnet werden.

18. Verwendung einer Vorrichtung (1) gemäss einem der Ansprüche 1 bis 8 oder eines Systems (3) gemäss einem der Ansprüche 9 bis 11 zum Pipettieren oder Dispensieren von Flüssigkeitsproben (4), **dadurch gekennzeichnet, dass** Flüssigkeitsproben (4) in zumindest einen Probenbehälter (6) oder auf zumindest einen Träger abgegeben und Blöcke 8,8',9,9' in zumindest einer Position (I,II,III) gemäss einem der Ansprüche 12 bis 14 angeordnet werden.

19. Verwendung gemäss einem der Ansprüche 17 oder 18, **dadurch gekennzeichnet, dass** zum Gebrauch bestimmte Pipetten- oder Dispenserspitzen (2) in zumindest ein Probenröhrchen (17) oder ein Well (19) einer Mikroplatte (18) abgesenkt werden.

20. Verwendung gemäss einem der Ansprüche 17 oder 18, **dadurch gekennzeichnet, dass** die Plätze in den Blöcken (8,8',9,9') für die nicht zum Gebrauch bestimmten Pipetten- oder Dispenserspitzen (2) nicht bestückt werden.

## Claims

1. A device (1) for situating pipette or dispenser tips (2) in a system (3) for manipulating liquid samples (4), this device (1) comprising:
- a robot manipulator (5) for orienting pipette or dispenser tips (2) in a X direction and in a Y direction running essentially perpendicularly thereto in relation to sample containers (6) situated in or on the system (3);
- pipette or dispenser tips (2), which extend essentially vertically and may be raised and lowered in a Z direction running essentially perpendicularly to the X and Y directions;
- drives for moving the robot manipulator (5); and
- processors for controlling the movements and actions of the robot manipulator (5) and/or of the pipette or dispenser tips (2);
**characterized in that** the device (1) comprises at least two blocks (8, 9) situated on an arm (7) of the robot manipulator (5), on each of which at least two pipette or dispenser tips (2) are situated at an axial distance (10) to one another which essentially corresponds to the lattice spacing of wells (19) of a microplate (18), at least one of these blocks (8, 9) - for alternating restricted orientation of the pipette or dispenser tips (2) of the two blocks (8, 9) along a shared line (12) - being implemented as individually movable in the X direction and in the Y direction.

2. The device according to Claim 1, **characterized in that** the pipette or dispenser tips (2) are fixed immovably on the block (8, 9) carrying them, the block (8, 9) being implemented so it may be raised and lowered in the Z direction.

3. The device according to Claim 1, **characterized in that** the pipette or dispenser tips (2) are fixed so they are movable on the block (8, 9) carrying them, each of the pipette or dispenser tips (2) being implemented so it may be raised and lowered individually in the Z direction.

4. The device according to one of the preceding claims, **characterized in that** each two of the blocks (8, 9) are implemented having essentially identical constructions and are situated mirror-reversed to one another.

5. The device according to Claim 4, **characterized in that** the blocks (8, 9) may be situated adjacent to one another and having an intermediate space (20) to one another, so that the pipette or dispenser tips (2) are situated along the shared line (12).

6. The device according to Claim 4, **characterized in that** the blocks (8, 9) may be situated mirror symmetrically opposite to one another at a distance (13), so that the pipette or dispenser tips (2) are opposite to one another in two spaced lines (12, 12').

7. The device according to one of the preceding claims, **characterized in that** the number of the pipette or dispenser tips (2) per block (8, 9) is defined by an integral multiple of the number 2, in particular by the number 4 or 8.

8. The device according to one of the preceding claims, **characterized in that** the axial distance (10) between the pipette or dispenser tips (2) in a block (8, 9) is 4.5 mm, 9 mm, or 18 mm.

9. A system (3) for manipulating liquid samples (4) having at least one essentially horizontal work field (11) and sample containers (6) which may be situated thereon, **characterized in that** it comprises at least one device (1) for situating pipette or dispenser tips (2) according to one of the preceding claims.

10. The system (3) according to Claim 9, **characterized in that** the blocks (8, 9) of the device (1) having the pipette or dispenser tips (2) are movable back and forth essentially in the entire area of the work table (11) in the X direction and in the Y direction.

11. The system (3) according to Claim 10, **characterized in that** it comprises at least one carrier (16) or one rack (21), on which microplates (18) having wells (19), in particular having 96 or 384 wells, or sample tubes (17) may be positioned.

12. A method for situating pipette or dispenser tips (2) in a system (3) for manipulating liquid samples (4) using a device (1) which comprises:
- a robot manipulator (5) for orienting pipette or dispenser tips (2) in a X direction and in a Y direction running essentially perpendicularly thereto in relation to sample containers (6) situated in or on the system (3);
- pipette or dispenser tips (2), which extend essentially vertically and may be raised and lowered in a Z direction running essentially perpendicularly to the X and Y directions;
- drives for moving the robot manipulator (5); and
- processors for controlling the movements and actions of the robot manipulator (5) and/or of the pipette or dispenser tips (2);
**characterized in that** the device (1) comprises at least two blocks (8, 9) situated on an arm (7) of the robot manipulator (5), on each of which at least two pipette or dispenser tips (2) are situated at an axial distance (10) to one another which essentially corresponds to the lattice spacing of wells (19) of a microplate (18), at least one of these blocks (8, 9) being moved individually in the X direction and in the Y direction, so that the pipette or dispenser tips (2) of the two blocks (8, 9) are oriented in an alternating and restricted manner along a shared line (12) and assume a first position (I).

13. The method according to Claim 12, **characterized in that** two blocks (8, 9) are situated adjacent to one another and having an intermediate space (20) to one another, so that the pipette or dispenser tips (2) are situated along the shared line (12) and assume a second position (II).

14. The method according to Claim 12, **characterized in that** the blocks (8, 9) are situated opposite to one another mirror-symmetrically at a distance (13) so that the pipette or dispenser tips (2) are opposite to one another in two spaced lines (12, 12') and assume a third position (III).

15. The method according to one or more of Claims 12 through 14, **characterized in that** by regrouping the blocks (8, 9), the pipette or dispenser tips (2) - starting from the first position according to Claim 12 and resulting in the second position according to Claim 13 or the third position according to Claim 14 - execute re-pipetting and distribution of the liquid samples (4) from a 384-well microplate to 96-well microplates.

16. The method according to one or more of Claims 12 through 14, **characterized in that** by regrouping the blocks (8, 9), the pipette or dispenser tips (2) - starting from the second position according to Claim 13 or from the third position according to Claim 14 and resulting in the first position according to Claim 12 - execute re-pipetting and consolidation of the liquid samples (4) from 96-well microplates to a 384-well microplate.

17. A use of a device (1) according to one of Claims 1 through 8 or a system (3) according to one of Claims 9 through 11 for pipetting or dispensing liquid samples (4), **characterized in that** liquid samples (4) are taken from at least one sample container (6) or from at least one carrier and blocks (8, 8', 9, 9') are situated in at least one position (I, II, III) according to one of Claims 12 through 14.

18. A use of a device (1) according to one of Claims 1 through 8 or a system (3) according to one of Claims 9 through 11 for pipetting or dispensing liquid samples (4), **characterized in that** liquid samples (4) are dispensed into at least one sample container (6) or onto at least one carrier and blocks (8, 8', 9, 9') are situated in at least one position (I, II, III) according to one of Claims 12 through 14.

19. The use according to one of Claims 17 or 18, **characterized in that** pipette or dispenser tips (2) intended for use are lowered into at least one sample tube (17) or one well (19) of a microplate (18).

20. The use according to one of Claims 17 or 18, **characterized in that** the spaces in the blocks (8, 8', 9, 9') for the pipette or dispenser tips (2) not intended for use are not equipped.

## Revendications

1. Dispositif (1) de placement de pointes de pipettes ou de distributeurs (2) dans un système (3) destiné à manipuler des échantillons de fluide (4), ce dispositif (1) comprenant :
• un manipulateur robotisé (5) permettant d'orienter des pointes de pipettes ou de distributeurs (2) dans une direction X et dans une direction Y qui lui est essentiellement perpendiculaire concernant des porte-échantillons (6) disposés dans ou sur le système (3) ;
• des pointes de pipettes ou de distributeurs (2) qui s'étendent essentiellement verticalement et qui peuvent être relevées et abaissées dans une direction Z qui s'étend essentiellement perpendiculairement aux directions X et Y ;
• des entraînements permettant de déplacer le manipulateur robotisé (5) ; et
• des processeurs permettant de commander les déplacements et actions du manipulateur robotisé (5) ou des pointes de pipettes ou de distributeurs (2) ;
**caractérisé en ce que** le dispositif (1) comprend au moins deux blocs (8, 9) disposés au niveau d'un bras (7) du manipulateur robotisé (5), au niveau desquels sont disposés au moins respectivement deux pointes de pipettes ou de distributeurs (2) selon un écart axial (10) l'une par rapport à l'autre qui correspond essentiellement à l'écart de grille des puits (19) d'une plaque de microtitration (18), au moins un de ces blocs (8, 9) étant exécuté de façon mobile individuellement dans la direction X et dans la direction Y - pour un alignement alterné en crémaillère des pointes de pipettes ou de distributeurs (2) des deux blocs (8, 9) le long d'une ligne commune (12).

2. Dispositif selon la revendication 1, **caractérisé en ce que** les pointes de pipettes ou de distributeurs (2) sont fixées de façon inamovible au niveau de ce bloc (8, 9) qui les porte, le bloc (8, 9) étant exécuté pour pouvoir être relevé et abaissé dans la direction Z.

3. Dispositif selon la revendication 1, **caractérisé en ce que** les pointes de pipettes ou de distributeurs (2) sont fixées de façon mobile au niveau de ce bloc (8, 9) qui les porte, chacune des pointes de pipettes ou de distributeurs (2) étant exécutée pour pouvoir être relevée ou abaissée individuellement dans la direction Z.

4. Dispositif selon l'une des revendications précédentes, **caractérisé en ce que** respectivement deux des blocs (8, 9) sont exécutés essentiellement selon une même construction et sont disposés en miroir l'un par rapport à l'autre.

5. Dispositif selon la revendication 4, **caractérisé en ce que** les blocs (8, 9) peuvent être disposés côte à côte et avec un espace intermédiaire (20) entre eux de façon à ce que les pointes de pipettes ou de distributeurs (2) soient disposées le long d'une ligne commune (12).

6. Dispositif selon la revendication 4, **caractérisé en ce que** les blocs (8, 9) peuvent être disposés selon une symétrie de miroir l'un par rapport à l'autre, à une distance (13), de façon à ce que les pointes de pipettes ou de distributeurs (2) se trouvent opposées sur deux lignes (12, 12') écartées l'une de l'autre.

7. Dispositif selon l'une des revendications précédentes, **caractérisé en ce que** le nombre des pointes de pipettes ou de distributeurs (2) par bloc (8, 9) est défini par un multiple entier du nombre 2, en particulier par le nombre 4 ou 8.

8. Dispositif selon l'une des revendications précédentes, **caractérisé en ce que** l'écart axial (10) entre les pointes de pipettes ou de distributeurs (2) d'un bloc (8, 9) est de 4,5 mm, 9 mm ou 18 mm.

9. Système (3) de manipulation d'échantillons de fluide (4) comportant au moins un plan de travail (11) essentiellement horizontal et des porte-échantillons (6) pouvant être disposés dessus, **caractérisé en ce qu'**il comporte au moins un dispositif (1) de placement de pointes de pipettes ou de distributeurs (2) selon l'une des revendications précédentes.

10. Système (3) selon la revendication 9, **caractérisé en ce que** les blocs (8, 9) du dispositif (1) avec les pointes de pipettes ou de distributeurs (2) sont mobiles par va et vient dans la direction X et dans la direction Y essentiellement dans toute la zone de la table de travail (11).

11. Système (3) selon la revendication 10, **caractérisé en ce qu'**il comprend au moins un support (16) ou une baie (21) sur lequel (laquelle) peuvent être positionnées des plaques de microtitration (18) comportant des puits (19), en particulier 96 ou 384 puits, ou des tubes porte-échantillons (17).

12. Procédé de placement de pointes de pipettes ou de distributeurs (2) dans un système (3) destiné à manipuler des échantillons de fluide (4) et comportant un dispositif (1) qui comprend :
• un manipulateur robotisé (5) permettant d'orienter des pointes de pipettes ou de distributeurs (2) dans une direction X et dans une direction Y qui lui est essentiellement perpendiculaire concernant des porte-échantillons (6) disposés dans ou sur le système (3) ;
• des pointes de pipettes ou de distributeurs (2) qui s'étendent essentiellement verticalement et qui peuvent être relevées et abaissées dans une direction Z qui s'étend essentiellement perpendiculairement aux directions X et Y ;
• des entraînements permettant de déplacer le manipulateur robotisé (5) ; et
• des processeurs permettant de commander les déplacements et actions du manipulateur robotisé (5) ou des pointes de pipettes ou de distributeurs (2) ;
**caractérisé en ce que** le dispositif (1) comprend au moins deux blocs (8, 9) disposés au niveau d'un bras (7) du manipulateur robotisé (5), au niveau desquels sont disposées au moins respectivement deux pointes de pipettes ou de distributeurs (2) selon un écart axial (10) l'une par rapport à l'autre qui correspond essentiellement à l'écart de grille des puits (19) d'une plaque de microtitration (18), au moins un de ces blocs (8, 9) étant déplacé individuellement dans la direction X et dans la direction Y, de façon telle que les pointes de pipettes ou de distributeurs (2) des deux blocs (8, 9) sont orientées de façon alternée en crémaillère le long d'une ligne commune (12) et occupent une première position (I).

13. Procédé selon la revendication 12, **caractérisé en ce que** deux blocs (8, 9) sont disposés côte à côte et avec un espace intermédiaire (20) entre eux de façon à ce que les pointes de pipettes ou de distributeurs (2) soient disposées le long d'une ligne commune (12) et occupent une seconde position (II).

14. Procédé selon la revendication 12, **caractérisé en ce que** les blocs (8, 9) sont disposés selon une symétrie de miroir l'un par rapport à l'autre, à une distance (13), de façon à ce que les pointes de pipettes ou de distributeurs (2) se trouvent opposées sur deux lignes (12, 12') écartées l'une de l'autre et occupent une troisième position (III).

15. Procédé selon une ou plusieurs des revendications 12 à 14, **caractérisé en ce que,** par un réarrangement des blocs (8, 9), les pointes de pipettes ou de distributeurs (2) - en partant de la première position selon la revendication 12 et en allant vers la seconde position selon la revendication 13 ou vers la troisième position selon la revendication 14 - exécutent un transvasement de pipetage et une répartition des échantillons de fluide (4) depuis une plaque 384 puits vers des plaques 96 puits.

16. Procédé selon une ou plusieurs des revendications 12 à 14, **caractérisé en ce que,** par un regroupement des blocs (8, 9), les pointes de pipettes ou de distributeurs (2) - en partant de la seconde position selon la revendication 13 ou de la troisième position selon la revendication 14 et en allant vers la première position selon la revendication 12 - exécutent un transvasement de pipetage et une concentration des échantillons de fluide (4) depuis des plaques de microtitration 96 puits vers une plaque de microtitration 384 puits.

17. Utilisation d'un dispositif (1) selon l'une des revendications 1 à 8 ou d'un système (3) selon l'une des revendications 9 à 11 pour le pipetage ou la distribution d'échantillons de fluide (4), **caractérisée en ce que** les échantillons de fluide (4) sont prélevés d'au moins un porte-échantillon (6) ou d'au moins un support, et **en ce que** les blocs (8, 8', 9, 9') sont disposés selon au moins une position (I, II, III) selon l'une des revendications 12 à 14.

18. Utilisation d'un dispositif (1) selon l'une des revendications 1 à 8 ou d'un système (3) selon l'une des revendications 9 à 11 pour le pipetage ou la distribution d'échantillons de fluide (4), **caractérisée en ce que** les échantillons de fluide (4) sont délivrés dans au moins un porte-échantillon (6) ou sur au moins un support et **en ce que** les blocs (8, 8', 9, 9') sont disposés selon au moins une position (I, II, III) selon l'une des revendications 12 à 14.

19. Utilisation selon l'une des revendications 17 ou 18, **caractérisée en ce que** des pointes de pipette ou de distributeur (2) définies pour cette utilisation sont abaissées dans au moins un tube porte-échantillons (17) ou un puits (19) d'une plaque de microtitration (18).

20. Utilisation selon l'une des revendications 17 ou 18, **caractérisée en ce que** les emplacements des blocs (8, 8', 9, 9') pour les pointes de pipettes ou de distributeur (2) non définies pour cette utilisation ne sont pas équipés.
